Europäisches Patentamt

European Patent Office

Office européen des brevets

(11) Publication number: **0 198 217**
**A1**

## EUROPEAN PATENT APPLICATION

(21) Application number: **86103225.8**

(22) Date of filing: **11.03.86**

(51) Int. Cl.⁴: **F16D 65/12**

(30) Priority: **18.04.85 US 724715**

(43) Date of publication of application:
**22.10.86 Bulletin 86/43**

(84) Designated Contracting States:
**DE FR GB IT SE**

(71) Applicant: **ALLIED CORPORATION**
**Columbia Road and Park Avenue P.O. Box**
**2245R (Law Dept.)**
**Morristown New Jersey 07960(US)**

(72) Inventor: **Heidmann, Kurt Richard c/o Allied**
**Corporation**
**401 N. Bendix Drive P.O. Box 4001**
**South Bend, IN 46634(US)**

(74) Representative: **Brullé, Jean et al**
**Service Brevets Bendix 44, rue François 1er**
**F-75008 Paris(FR)**

(54) **Disc brake rotor.**

(57) A disc brake rotor (10) includes a support member (12) which is attached to a member to be braked and a separate rotor head (16) which is mounted on the support member (12). Mounting pins (30) are received within radially extending vent passages (28) in the rotor head (16) and are screwed into the corresponding support area (14) on the support member (12). The heads (36) of the pins (30) are relatively smooth, so that they restrain the rotor head (16) against axial and circumferential movement relative to the support member (12) but permit radial expansion of the rotor head (16) with respect to the support member (12).

FIG. I

## DISC BRAKE ROTOR

This invention relates to a disc brake rotor.

Floating head type disc brake assemblies are usually provided with a fixed rotor. However, damage to the rotor of a floating caliper disc brake due to thermal stress occurs if the rotor is subjected to heavy usage, such as on heavy duty vehicles equipped with disc brakes. These thermal stresses often result in radial cracking of the rotor friction surfaces. This cracking can be attributed to large thermal gradients between the rotor surfaces and the mounting flange. Cracking is also caused by the mechanical restraints the rotor surfaces and mounting flange impose upon one another when one of these members expands more than the other member when it is heated to a higher temperature. One solution to these problems is to provide a fixed head, floating rotor brake, so that the thermal stresses are eliminated by the elimination of the mutual restraint between the rotor and its mounting surface. The floating rotor design inherently creates a heat barrier between the rotor surfaces and the mounting flange. However, floating rotors often have durability problems because of the necessary splined connection between the rotor and the mounting flange.

According to this invention, a rotor design for a floating caliper disc brake includes rotor braking surfaces which are mechanically and thermally separated from the mounting flange, yet can support braking torque. Furthermore, the two piece rotor design disclosed herein does not have the durability problems associated with the aforementioned floating rotors.

Although two piece rotors have been proposed before, such as in prior art U.S. Patents 3,994,370 and 4,026,393, the present design proposes a unique solution to the thermal and mechanical stress problem by providing pins in the rotor vent holes to couple the rotor head to the mounting flange. The pins restrain the rotor head from axial and circumferential movement relative to the fixed support or mounting flange, thereby enabling the rotor to take braking forces, but permit relative movement between the rotor head and the mounting flange or fixed support member in the radial direction, thereby permitting the rotor to "grow" radially in response to varying thermal conditions, thus accommodating the thermal stresses that would otherwise result.

In addition to the ability of the rotor of the present invention to accommodate the thermal and mechanical stresses inherent in rotors used in high energy floating caliper disc brakes, the present invention also has the advantage of a common rotor section for all installations, while permitting the various fixed supports necessary to accommodate specific vehicle configurations. The present invention also permits the rotor head and the fixed support or mounting flange to be made from different, although compatible, materials. Replacement of the rotor when necessary is facilitated by the present invention. Existing fixed rotor designs used on heavy duty vehicles do not permit the use of power tools to remove the rotor, since the rotor extends parallel to the wheel to which bolts attach the mounting flange. In the present design, however, pins having a polygonal recess are installed in the rotor vent holes, permitting power tools to be used to remove the rotor head.

These and other advantages of the present invention will become apparent from the following description with reference to the accompanying drawing, in which:

Figure 1 is a fragmentary, longitudinal cross-sectional view of a disc brake rotor made pursuant to the teachings of my present invention;

Figure 2 is a fragmentary cross-sectional view taken substantially along lines 2-2 of Figure 1;

Figure 3 is a top view of the rotor of Figure 1 taken along lines 3-3 thereof; and

Figure 4 is a fragmentary side elevational view of the rotor illustrated in Figures 1-3.

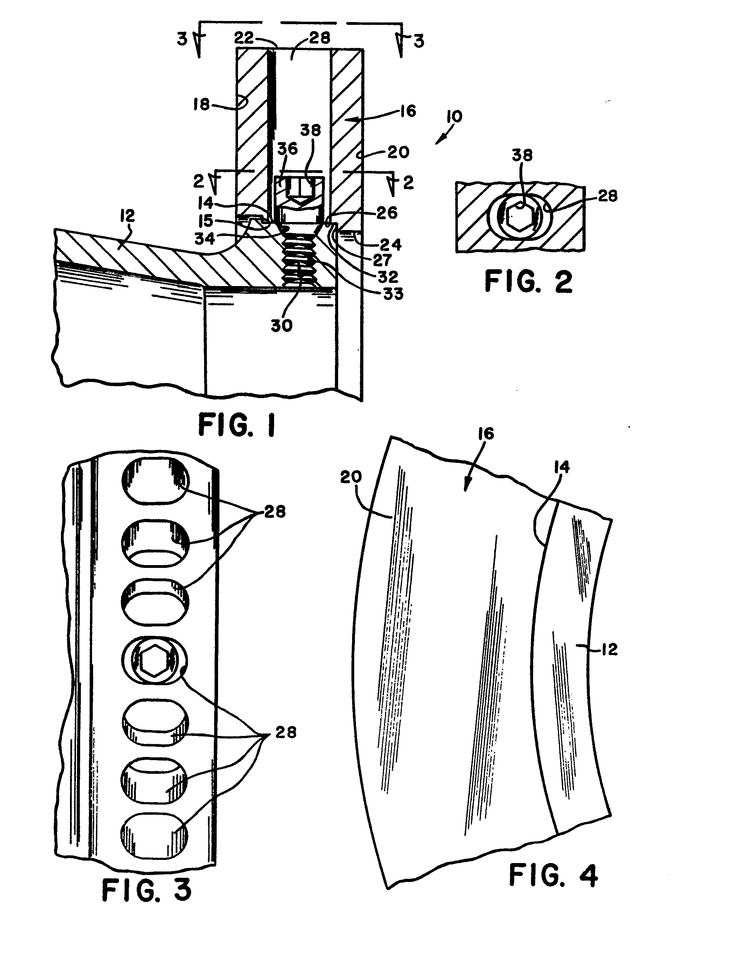

Referring now to the drawings, a disc brake rotor assembly generally indicated by the numeral 10 includes a support member 12 which is attached to a member to be braked (not shown) in the conventional manner. The support member 12 is rotatable about the longitudinal axis thereof with the aforementioned vehicle wheel. The support member 12 defines a circumferentially extending stepped mounting area 14 on the outer circumferential surface of the support member defining a shoulder 15. An annular rotor head generally indicated by the numeral 16 defines a pair of opposed, axially spaced friction faces 18, 20 which are frictionally engaged by friction members (not shown) of the disc brake assembly when a brake application is effected. The rotor head 16 further includes an outer circumferentially extending surface 22 and an inner circumferentially extending surface 24 which interconnect the friction faces 18, 20. The inner circumferentially extending surface 24 defines a stepped mounting area 26 defining a shoulder 27 which engages the mounting area 14 on the support 12 when the rotor head 16 is installed on the support member 12. Shoulders 15 and 27 cooperate to locate the rotor head 16 axially on the support member 12. Conventional vent passages 28 extend radially through the rotor head 16 and interconnect the surfaces 22, 24. As most clearly seen in Figure 2, the vent passages 28 have a substantially elliptical cross section.

Radially projecting pins 30 are installed in selected ones of the vent holes 28 to mount the rotor head 16 on the support 12. As best seen in Figure 2, the diameter of the pins 30 are substantially the same as the minor axis of the elliptical vent holes 28, to thereby restrain axial and circumferential movement of the rotor head 16 with respect to the support member 12. However, the outer circumferential surfaces 32 of the pins 30 are substantially smooth, to thereby permit the rotor head 16 to move radially with respect to the support member 12 to thereby accommodate thermal stresses. The pins 30 each include a tapered threaded shank 32 which is screwed into correspondingly threaded openings in the support member 12. The tapered portion 34 of each of the pins 30 is engaged with correspondingly tapered counterbores of the threaded openings 33.

The head 36 of each of the pins 30 is provided with a recess 38 having a polygonal cross section. When the rotor head 16 is to be installed on the support member 12, the mounting surface 26 on the head 16 is engaged with the mounting surface 14 on the support member 12. The pins 30 are then installed through circumferentially spaced ones of the vents 28. A power tool having a relatively long stem with a cross section compatible with the cross section of the recess 38 is then inserted through the passage 28 and engaged with the recess 38. Accordingly, each of the pins 30 can then be screwed into the opening in the tubular support member 12, thereby installing the rotor head 16 on the support member 12.

Since the diameter of the pins 30 are substantially equal to the minor axis of the vents 28, the rotor head is restrained from moving axially and circumferentially relative to the support member 12. However, since the pins 30 are received within the vent passages 28, and, since the surface 32 of the pins is substantially smooth, some radial movement of the rotor head 16 relative to the support member 12 is accommodated, thereby preventing damage due to mechanical stresses induced by thermal differentials between the rotor head 16 and the support member 12. These stresses are generated, for example, during a brake application when the aforementioned friction elements (not shown) are brought into braking engagement with the friction faces 18, 20 of the rotor head 16. The engagement of the mounting surface 26 with the mounting surface 14 also acts as a thermal barrier between the rotor head 16 and the support member 12, thereby inhibiting transfer of heat from the rotor head 16 to the support member 12. Accordingly, thermal stresses due to heat transfer between the members are also inhibited.

Obviously, since the rotor head 16 is separate from the support member 12 and is fastened thereto only by the pins 30, the rotor head 16 may be made from a material different from that of the support member 12. The difference in materials may be chosen to minimize material expense, to minimize weight, or to provide for the best thermal characteristics of the two members. When the rotor head 16 must be removed from the support member 12, the head 16 may be removed by inserting the aforementioned stem of a power tool through the vents 28, engaging the stem with the recess 38, and operating the power tool to unscrew the pins 30 from the apertures provided in the support member 12. Accordingly, the rotor head 16 may thereupon be easily removed from the support member 12.

**Claims**

1. Disc brake rotor (10) including a support member (12) for attachment to a member to be braked for rotation about an axis, said support member (12) defining a circumferentially extending mounting area (14) on the outer circumferential surface of said support member (12), an annular rotor head (16) having a pair of opposed, axially spaced friction faces (18,20) and inner (24) and outer (22) circumferential surfaces interconnecting the friction faces (18,20), said inner circumferential surface (24) of said rotor head (16) engaging the circumferentially extending mounting area (14) on said support member (12) when the rotor head (16) is mounted on the support member (12), characterized in that said rotor head (16) and said support member (12) are fastened together by securing means (30) for preventing relative axial and circumferential movement between the rotor head (16) and the support member (12) but permitting relative movement therebetween in a radial direction with respect to said axis of rotation to accommodate differential thermal expansion between the rotor head (16) and the support member (12).

2. Disc brake rotor as claimed in claim 1, further characterized in that said rotor head (16) has circumferentially spaced, radially extending passages (28) therethrough from said outer circumferential surface (22) to said inner circumferential surface (24), said securing means (30) projecting radially from said mounting area (14) into said passages.

3. Disc brake rotor as claimed in claim 2, further characterized in that said securing means (30) are circumferentially spaced, radially projecting pins (30) extending from said mounting area (14) into said passages (28).

4. Disc brake rotor as claimed in claim 3, further characterized in that each of said pins (30) is screwed into said mounting area (14) and has a head (36) projecting into said passages (28), said head (36) having a recess (38) of a polygonal cross section to receive a tool inserted in said passages (28) from the outer circumferential surface (22) to unscrew said pins (30) to permit removal of the rotor head (16) from said support member (12).

5. Disc brake rotor as claimed in claim 1, further characterized in that said mounting area (14) and said rotor head (16) have cooperating shoulders (15,27) to locate said rotor head (16) axially with respect to said support member (12).

6. Disc brake rotor as claimed in claims 2-4, further characterized in that said passages (28) have an elliptical cross section and the portion of the pins (30) received in the passages (28) are substantially cylindrical having a diameter substantially equal to the minor axis of the ellipse defined by the cross section of said passages (28).

7. Disc brake rotor as claimed in claims 2-4, further characterized in that the portion (36) of the pins (30) received in said passages (28) have a substantially smooth circumferentially extending surface at least a portion of which substantially engages the wall of a corresponding passage (28) to thereby permit radial movement of the rotor head (16) with respect to the pins (30) to accommodate thermal expansion of the rotor head (16) with respect to the support member (12).

**FIG. I**

**FIG. 2**

**FIG. 3**

**FIG. 4**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 014 483 (KNORR-BREMSE GmbH) <br> * The whole document; figures 1-4 * | 1 | F 16 D 65/12 |
| A | | 2-4 | |
| | --- | | |
| A,D | US-A-4 026 393 (GEBHARDT et al.) | | |
| | --- | | |
| A | DE-B-1 164 761 (BERGISCHE STAHL-INDUSTRIE) | | |
| | --- | | |
| A | FR-A-2 306 110 (KNORR-BREMSE GmbH) | | |
| | --- | | **TECHNICAL FIELDS SEARCHED (Int. Cl.4)** |
| A | DE-B-1 134 409 (KRAUS-MAFFEI AKTIENGESELLSCHAFT) | | F 16 D 65/00 <br> B 61 H 5/00 |
| | --- | | |
| A,D | US-A-3 994 370 (GEBHARDT et al.) | | |
| | --- | | |
| A | DE-A-2 824 676 (KNORR-BREMSE GmbH) | | |
| | --- | | |
| A | DE-B-1 086 093 (KNORR-BREMSE GmbH) | | |
| | ---    -/- | | |

The present search report has been drawn up for all claims

| Place of search | Date of completion of the search | Examiner |
|---|---|---|
| THE HAGUE | 25-07-1986 | BRAEMS C.G.I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

  & : member of the same patent family, corresponding document

EPO Form 1503 03 82

| | **DOCUMENTS CONSIDERED TO BE RELEVANT** | | Page 2 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | DE-A-3 311 293 (BERGISCHE STAHL-INDUSTRIE) | | |
| | --- | | |
| A | FR-A-2 384 162 (KNORR-BREMSE GmbH) | | |
| | --- | | |
| A | GB-A-1 032 923 (KNORR-BREMSE GmbH.) | | |
| | --- | | |
| A | GB-A-1 131 208 (SOCIETE ANONYME ANDRE CITROEN) | | |
| | ----- | | |

TECHNICAL FIELDS
SEARCHED (Int. Cl.4)

The present search report has been drawn up for all claims

| Place of search | Date of completion of the search | Examiner |
|---|---|---|
| THE HAGUE | 25-07-1986 | BRAEMS C.G.I. |